# EUROPEAN PATENT SPECIFICATION

(11) **EP 2 051 432 B1**
(45) Date of publication and mention of the grant of the patent: **03.07.2013**
(21) Application number: 07785436.2
(22) Date of filing: 23.08.2007
(51) Int. Cl.: H04L 9/00, H04L 29/06

(54) **AN AUTHENTICATION METHOD, SYSTEM, SUPPLICANT AND AUTHENTICATOR**
VERFAHREN UND VORRICHTUNG ZUR AUTHENTIFIZIERUNG, ANFRAGER UND AUTHENTIFIZIERER
PROCÉDÉ, SYSTÈME D'AUTHENTIFICATION, SYSTÈME, DEMANDEUR ET AUTHENTIFICATEUR

(30) Priority: 31.08.2006 CN 200610111873
(43) Date of publication of application: 22.04.2009
(73) Proprietor: Huawei Technologies Co., Ltd., Longgang District, Shenzhen Guangdong 518129 (CN)
(72) Inventor: GUAN, Hongguang, Guangdong 518129 (CN)
(74) Representative: Körber, Martin Hans
(86) International application number: PCT/CN2007/070539
(87) International publication number: WO 2008/031351

(56) References cited:
- CN-A- 1 501 656
- US-A1- 2005 188 211
- US-A1- 2006 026 671
- US-A1- 2006 143 693
- US-A1- 2006 190 721

## Description

### FIELD OF THE INVENTION

This invention relates to the field of Internet technologies, and in particular, to a method, system and apparatus for performing 802.1x authentication.

### BACKGROUND

With the development of Internet technologies, network security becomes more and more important. Service providers (SPs) expects to control the user access, which gives rise to Institute for Electrical and Electronic Engineering (IEEE) 802.1x protocol, briefly known as 802.1x protocol. The 802.1x is a port-based network access control protocol which was enacted by the IEEE standardization organization in December 2004.

The port-based network access control performs authentication and control for the access client on the physical access level of the network switch, namely, network access device. The physical access level refers to a port of the network access device such as Ethernet switch or broadband access switch. The user connected to the port can access the resources in the network if the user passes the authentication successfully, and is unable to access the resources in the network if the authentication fails. In the port-based network access control protocol defined by the 802.1x protocol, the port may be a physical port or a logical port. There are two typical application modes: a physical port of the Ethernet switch is connected with a client computer; or the Wireless Local Area Network (WLAN) access mode defined by the IEEE802.1x protocol applies.
The application system of the 802.1x protocol involves a requester, an authenticator, and an authentication server. The requester refers to a client, and the client of the 802.1x is generally installed in a Personal Computer (PC). On the user access layer, the Ethernet switch implements the functions of an 802.1x authenticator; the Authentication Authorization Accounting (AAA) server based on 802.1x generally resides in the AAA center of the operator. An Extended Authentication Protocol (EAP) over LAN (EAPoL) defined by IEEE 802.1x runs between the 802.1x client and the Ethernet switch, and an EAP runs between the Ethernet switch and the AAA server.

The 802.1x authentication process is described below.

After a physical connection is created between the requester and the authenticator, the requester sends a start message such as "EAPoL-Start" to a multicast address "01-80-C2-00-00-03", indicating start of 802.1x access.

The authenticator sends a message of requesting authentication such as "EAP-Request/Identity" to the requester address, requiring the requester to report his/her username to the authenticator.

The requester replies with a message (such as EAP-Response/Identity) carrying a username to the authenticator in response to the message of requesting authentication.

The authenticator sends an access request message such as Access-Request to the Radius AAA server; the access request message is in the format of EAP Over Radius (Remote Authentication Dial in User Service) and carries the EAP-Response/Identity message sent by the requester to the authenticator, thus submitting the username to the Radius AAA server

The Radius AAA server generates a challenge word composed of 128 bits.

The Radius AAA server replies to the authenticator with an access challenge word message such as "Access-Challenge", which carries an EAP-Request/MD5-Challenge message; further, the EAP-Request/MD5-Challenge message carries a Challenge word generated by the Radius AAA server.

The authenticator sends an EAP-Request/MD5-Challenge message to the requester, thus sending the Challenge word to the requester.

After receiving the EAP-Request/MD5-Challenge message, the requester lets the password and the Challenge word undergo the Message-Digest Algorithm 5 (MD5), and sends the obtained Challenge-Password to the authenticator through an EAP-Response/MD5-Challenge.

The authenticator sends a Challenge-Password to the Radius AAA server through an Access-Request message, and the Radius AAA server authenticates the password.

The Radius AAA server judges whether the user is legal according to the user information which contains Challenge-Password and a username; the Radius AAA server replies with an authentication success/failure message to authenticator; if the authentication succeeds, the message carries negotiation parameters and the relevant service attributes of the user to the requester for the purpose of authentication.

According to the authentication result, the authenticator replies to the requester with an authentication success/failure message (such as "EAP-Success/EAP-Failure"), notifying the requester of the authentication result. If the authentication fails, the process is ended; if the authentication succeeds, authorization and charging are performed subsequently.

It is evident that the foregoing 802.1x authentication process is suitable to the scenario with one requester and one authenticator, and does not cover the scenario with multiple requesters.

In view of the foregoing problems, the prior art provides a method for performing 802.1x authentication in the case that one authenticator and multiple requesters exist in shared media. A shared medium may be a device like a hub. For example, parties connected through a hub can receive messages sent by a party.

In this method, the authenticator is connected with multiple requesters through a shared medium. In this case, the authenticator creates a virtual sub-interface on the interface connected with the shared medium according to a Media Access Control (MAC) address or an IP address of each requester so that each virtual sub-interface corresponds to a requester. The authenticator records the rights of each virtual sub-interface. For example, which sub-interfaces are allowed to access a Virtual Private Network (VPN); which sub-interfaces are allowed to access the Internet; and which ones are recorded on the AAA server. The rights of the virtual sub-interfaces are set by an AAA server, and recorded by the authenticator accordingly. When a requester sends an authentication requester, the authenticator executes the authentication process according to the virtual sub-interface corresponding to each requester.

This method in the prior art executes 802.1x authentication in the case that one authenticator and multiple requesters exist in a shared medium, but disregards how to authenticate in a scenario with one requester and multiple authenticators. In the practical network, it is possible that one requester and multiple authenticators exist. Therefore, a method is required to implement 802.1x authentication in a scenario with one requester and multiple authenticators. The related art is:
US 2006/143693A1 disclosures a method, apparatus and system for selecting a wireless communication device for establishing a connection. The method according to some exemplary embodiments of the invention may include selecting a communication device for establishing a connection by determining whether one or more security-related characteristics of the communication device satisfy a security policy corresponding to a selected security class.

### SUMMARY

The present invention provides a method, system and apparatus for authentication. The method and system support 802.1x authentication in a scenario with one requester and multiple authenticators.

The technical solution under the present invention includes an authentication method, including:
sending, by a requester, an authentication request, wherein at least two authenticators receive the authentication request;
returning, by each authenticator that receives the authentication request, a response message carrying a source Media Access Control (MAC) address and a destination MAC address; and
comparing the source MAC address between the at least two authenticators, selecting an authenticator as a specified authenticator among the at least two authenticators according to an address selection rule as set, and performing authentication between the requester and the specified authenticator.

The technical solution under the present invention further includes an authentication system, including a requester and at least two authenticators; wherein
the requester is adapted to send an authentication request, receive a response message carrying a source MAC address and a destination MAC address from each authenticator, compare the source MAC address of the received responses, select an authenticator as a specified authenticator according to an address selection rule as set, and perform authentication with the specified authenticator; and
each authenticator is adapted to return the response message carrying a source MAC
address and a destination MAC address to the requester after receiving the authentication request wherein the destination MAC address is a requester address. The specified authenticator is adapted to perform authentication interaction with the requester.

Or, alternatively,
the requester is adapted to send an authentication request, receive a response message carrying a source MAC address and a destination MAC address from each authenticator, and perform authentication with the specified authenticator among at least two authenticators; and
each authenticator is adapted to return the response message carrying a source MAC address and a destination MAC address to the requester after receiving an authentication request wherein the destination address is a multicast address, compare the source MAC address between the authenticators, select an authenticator as the specified authenticator according to an address selection rule as set, and perform authentication interaction between the specified authenticator and the requester.

The technical solution according to the present invention further includes a requester, including:
an authentication interaction unit, adapted to send an authentication request, receive a response message carrying a source MAC address and a destination MAC address from at least two authenticators, and perform authentication with the specified authenticator; and
an authenticator selecting unit, adapted to compare the source MAC address of the response message from the authenticators, where the destination MAC address is the requester address, and select an authenticator as the specified authenticator according to an address selection rule as set.

The technical solution according to the present invention further includes an authenticator, including:
an authentication interaction unit, adapted to return a response message carrying a source MAC address and a destination MAC address to the requester after receiving an authentication request; wherein the destination MAC address is a multicast address, and the authentication interaction unit is adapted to perform authentication interaction with the requester when the authenticator is the specified authenticator;
an authenticator selecting unit, adapted to receive response messages from at least one other authenticator, and to compare the source MAC address of the receive messages with the MAC address of the authenticator, and select an authenticator as the specified authenticator according to the address selection rule as set;
a monitoring unit, adapted to monitor the authentication process between the authenticator and the requester when the authenticator is a non-specified authenticator; and
an authorizing unit, adapted to receive an authentication success message carrying requester information from the specified authenticator, and assign rights to the requester.

It can be seen from the foregoing technical solution that:
When the present invention applied in a scenario with one requester and multiple authenticators, the requester sends an authentication request to the authenticator, and the authenticator returns a response package carrying a source MAC address and a destination MAC address. By comparing the source MAC address between at least two authenticators, according to the set selection rule, the system selects a specified authenticator among multiple authenticators, and the specified authenticator performs authentication with the requester, thus enabling authentication in a scenario with one requester and multiple authenticators.

### BRIEF DESCRIPTION OF THE DRAWINGS

Figure 1 is an overall flowchart of the method according to the present invention;

Figure 2 is a flowchart according to a first embodiment of the present invention;

Figure 3 is a flowchart according to a second embodiment of the present invention; and

Figure 4 is a schematic diagram of the system according to the present invention.

### DETAILED DESCRIPTION

An authentication method provided in the present invention is to compare the source MAC address between at least two authenticators in the process of 802.1x authentication in a shared medium in the case that one requester and multiple authenticators exist, and select a specified authenticator for performing authentication with the requester according to the set address selection rule.

The present invention is hereinafter described in detail with reference to embodiments and accompanying drawings.

It is supposed that requester A accesses a network through a shared medium, and authenticators B and C access the network concurrently. When requester A sends the first EAPoL-Start message to the shared medium, authenticators B and C reply with an EAP-Request/Identity message, requiring requester A to report the username. In this case, requester A receives two EAP-Request/Identity packets and is unable to identify the true authenticator. This embodiment of the present invention aims to solve such a problem.

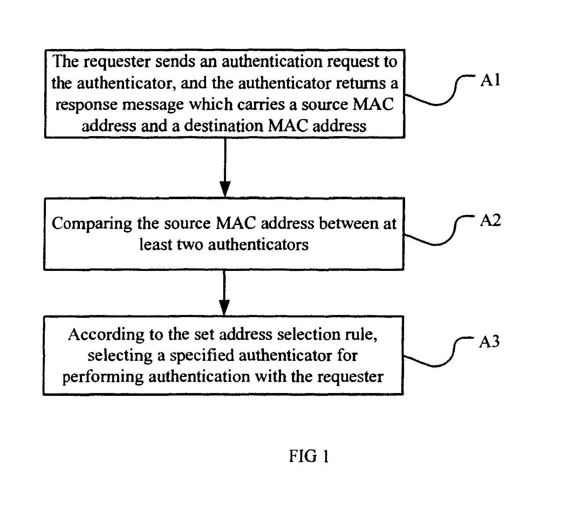

As shown in Figure 1, an overall flowchart of the method according to the present invention includes the steps detailed hereinafter.

A1. The requester sends an authentication request to the authenticator, and the authenticator returns a response message which carries a source MAC address and a destination MAC address.

A2. Comparing the source MAC address between at least two authenticators.

A MAC address is an identifier for identifying a network node, and is unique globally. Therefore, the source MAC address of each authenticator is fixed.

A3. According to the set address selection rule, selecting a specified authenticator for performing authentication with the requester.

The set address selection rule is to select the authenticator with the greater MAC address or the smaller one as a specified authenticator.

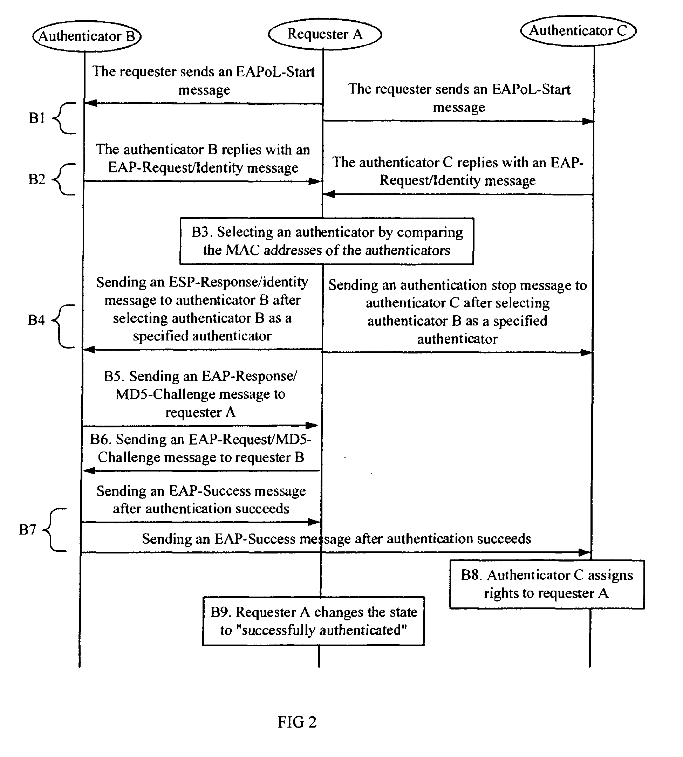

As shown in Figure 2, the process according to the first embodiment of the present invention includes steps detailed hereinafter.

B1. Requester A sends an EAPoL-Start into the shared media, and authenticators B and C receive the EAPoL-Start message from requester A concurrently.

It should be noted that, before step B1, a connection is created between authenticator B and authenticator C, and authenticators B and C are mutually trusted.

B2. Authenticators B and C reply with an EAP-Request/Identity message, requiring requester A to report the username.

The message returned by authenticators B and C carries a source MAC address and a destination MAC address, in which the destination MAC address is the address of requester A.

B3. After receiving two EAP-Request/Identity messages, requester A retrieves the source MAC addresses from the two messages, compares the source MAC addresses, selects the authenticator with the greater source MAC address or the smaller one as a specified authenticator according to the set rule (for example, selects authenticator B as a specified authenticator), and proceeds with the subsequent 802.1x authentication process.

B4. Requester A replies to authenticator B with an EAP-Response/Identity which carries a username, and sends an EAP-Failure message to authenticator C to notify authenticator C to stop 802.1x authentication.

B5. Through an EAP-Request/MD5-Challenge, authenticator B sends a Challenge generated by the AAA server to requester A.

B6. After receiving the EAP-Request/MD5-Challenge message, requester A lets the password and the Challenge word undergo the Message-Digest Algorithm 5 (MD5) to obtain a Challenge-Password, and sends the obtained Challenge-Password to authenticator B through an EAP-Response/MD5-Challenge.

B7. Authenticator B sends the received information to the AAA server for authenticating. If the authentication fails, authenticator B sends an EAP-Failure message to requester A, and the authentication process is ended; if the authentication process succeeds, authenticator B sends an EAP-Success message whose destination MAC address is the multicast address "01-80-C2-00-00-03".

It should be noted that, in the authentication process in the prior art, the destination MAC address of the EAP-Success message is requester A. In this embodiment of the present invention, the destination MAC address changes to the multicast address "01-80-C2-00-00-03" because: the multicast address is designed for use in 802.1x; and more essentially, authenticator C also needs to assign relevant rights to requester A after the authentication between requester A and authenticator B succeeds. However, as authenticator C does not take part in the authentication between requester A and authenticator B, authenticator B needs to send an authentication message whose destination MAC address is the multicast address so that authenticator C can receive the message and enable the corresponding port to assign proper rights to requester A, when the authentication succeeds. Moreover, authenticator C needs to add a field into the EAP-Success message. The field is the address of requester A, and indicates which requester in the shared media is authenticated successfully. In the prior art, the successfully authenticated requester is indicated through the destination MAC address.

B8. After receiving an EAP-Success message whose destination MAC address is 01-80-C2-00-00-03, authenticator C retrieves the details of the message, enables the corresponding port, and assigns proper rights to requester A.

B9. After receiving an EAP-Success message whose destination MAC address is 01-80-C2-00-00-03, authenticator A modifies its 802.1x state machine so that the state of authenticator A changes from unauthenticated to successfully authenticated.

The process of the first embodiment described above is summarized as: requester A selects either authenticator B or authenticator C as a specified authenticator.

Alternatively, the EAP-Request/Identity message may be modified at the beginning so that the specified authenticator is selected among the two authenticators. When requester A sends the first EAPoL-Start message to the shared medium, authenticators B and C reply with an EAP-Request/Identity message. In the traditional 802.1x protocol, the destination MAC address of the EAP-Request/Identity is the MAC address of requester A. As a result, although authenticator B and authenticator C receive messages from other each, they find that the destination MAC address of the message is not their own address and hence discard the message. If the destination MAC address of the EAP-Request/Identity message is modified to the multicast address "01-80-C2-00-00-03", authenticators B and C analyze the EAP-Request/Identity message received from the opposite party, retrieve the source MAC address of the opposite party for comparing with their own source MAC address, and check who is the authenticator of the shared medium.

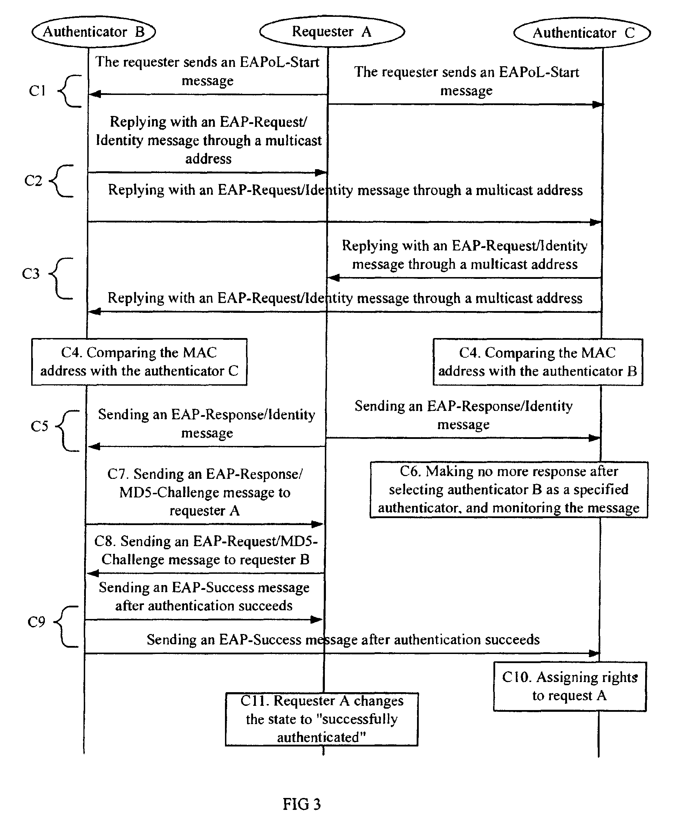

The process of the second embodiment shown in Figure 3 varies with the first embodiment of the present invention in that a specified authenticator is selected out of multiple authenticators by the authenticators, including the steps detailed hereinafter.

C 1. Requester A sends an EAPoL-Start into the shared media, and authenticators B and C receive the EAPoL-Start message from requester A concurrently.

It should be noted that before step B1, a connection is created between authenticator B and authenticator C, and authenticators B and C are mutually trusted.

C2. Authenticator B replies with an EAP-Request/Identity message, requiring requester A to report the username.

The message returned by authenticator B carries a source MAC address and a destination MAC address. It should be noted that the destination MAC address of the EAP-Request/Identity message here is the multicast address "01-80-C2-00-00-03" so that both requester A and authenticator C receive the EAP-Request/Identity message sent by authenticator B.

C3. Authenticator C replies with an EAP-Request/Identity message, requiring requester A to report the username.

The message returned by authenticator C carries a source MAC address and a destination MAC address. It should be noted that the destination MAC address of the EAP-Request/Identity message here is the multicast address "01-80-C2-00-00-03" so that both requester A and authenticator B receive the EAP-Request/Identity message sent by authenticator C.

Step C2 may occur either before or after step C3.

C4. After receiving an EAP-Request/Identity message from authenticator C, authenticator B analyzes the EAP-Request/Identity message of authenticator C, and retrieves the source MAC address of authenticator C for comparing with its own source MAC address. Depending on the set rule, authenticator B selects the authenticator with the greater source MAC address or the smaller one as a specified authenticator of the shared media.

Likewise, after receiving an EAP-Request/Identity message from authenticator B, authenticator C compares the source MAC address as mentioned above. Because the source MAC addresses of authenticators B and C are fixed and the rule of selecting the authenticator with the greater source MAC address or smaller one is fixed, it is certain that the authenticator selected by authenticator B is the same as the one selected by authenticator C for the shared medium. For example, authenticator B is ultimately selected as a specified authenticator.

C5. Requester A replies to authenticators B and C with an EAP-Response/Identity which carries a username.

C6. Authenticator C monitors the 802.1x authentication process of authenticators A and B and no longer responds to the EAP-Response/Identity message from requester A.

After an authenticator selects a certain authenticator as a specified authenticator of the shared medium, no further 802.1x authentication message will be sent any more. In this case, authenticator C only monitors the 802.1x authentication between requester A and the selected authenticator. After selecting authenticator B as a specified authenticator, authenticator C monitors the 802.1x authentication process between requester A and authenticator B.

C7. Through an EAP-Request/MD5-Challenge, authenticator B sends a Challenge generated by the AAA server to requester A.

After being selected as a specified authenticator, the authenticator performs the responsibilities as a specified authenticator, and works together with requester A to perform subsequent steps of 802.1 1x authentication. Here, the specified authenticator is authenticator B.

C8. After receiving the EAP-Request/MD5-Challenge message, requester A allows the password and the Challenge word to undergo the Message-Digest Algorithm 5 (MD5) to obtain a Challenge-Password, and sends the obtained Challenge-Password to authenticator B through an EAP-Response/MD5-Challenge.

C9. Authenticator B sends the received information to the AAA server for authenticating. If the authentication fails, authenticator B sends an EAP-Failure message to requester A, and the authentication process is ended; if the authentication process succeeds, authenticator B sends an EAP-Success message whose destination MAC address is the multicast address "01**-**80-C2-00-00-03".

When authenticator B sends an EAP-Success message whose destination MAC address is the multicast address "01-80-C2-00-00-03", both requester A and authenticator C receive the EAP-Success message.

C10. After receiving an EAP-Success message whose destination MAC address is 01-80-C2-00-00-03, authenticator C retrieves the details of the message for analyzing, and discovers that requester A has been authenticated by authenticator B successfully, and hence enables the port connected with the shared medium to assign proper rights to requester A.

C11. After receiving an EAP-Success message whose destination MAC address is 01-80-C2-00-00-03, authenticator A modifies its 802.1x state machine so that the state of authenticator A changes from unauthenticated to successfully authenticated.

It should be noted that the foregoing embodiment supposes that two authenticators - authenticators B and C exist. In the practical application, more authenticators may exist. For example, if three authenticators - authenticators B, C and D exist. Authenticator B trusts authenticator C, and authenticator C trusts authenticator D. If authenticator D is selected as a specified authenticator and authenticates requester A successfully, namely, trusts requester A, authenticators B and C trust requester A and assign proper rights to requester A.

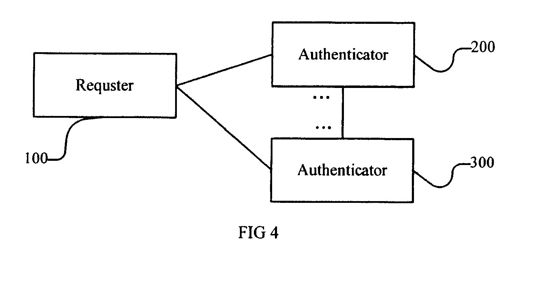

Introduced above is an authentication method according to the present invention. Accordingly, the present invention provides an authentication system. Figure 4 is a schematic diagram of the system according to the present invention.

The system includes a requester 100 and multiple authenticators - authenticator 200, and authenticator 300, as illustrated in the figure. The authenticators trust each other. It should be noted that the authentication performed by this system is 802.1x authentication performed in a shared medium.

The requester 100 is adapted to send authentication requests to the authenticator, and select a specified authenticator among multiple authenticators.

The authenticators 200 and 300 are adapted to return a response message carrying a source MAC address and a destination MAC address to the requester 100 after the requester 100 sends an authentication request, and select a specified authenticator among multiple authenticators.

In this system, the requester 100 compares the source MAC address between authenticators (for example, authenticators 200 and 300), selects a specified authenticator according to the set address selection rule in order to perform authentication. Before comparison, the destination MAC address in the response message returned by authenticators 200 and 300 to the requester 100 is the address of the requester 100.

Alternatively, in this system, both the authenticator 200 and the authenticator 300 compare the source MAC address between authenticators, and select a specified authenticator according to the set address selection rule in order to perform authentication. Before comparison, the destination MAC address in the response message returned by authenticators 200 and 300 to the requester 100 is a multicast address. It should be noted that here the destination MAC address of the EAP-Request/Identity message returned by authenticators 200 and 300 to the requester 100 is a multicast address "01-80-C2-00-00-03". Therefore, both the requester 100 and the authenticator 300 receive the EAP-Request/Identity message sent by authenticator 200. Likewise, both the requester 100 and the authenticator 200 receive the EAP-Request/Identity message sent by the authenticator 300.

The requester 100, the authenticator 200, and the authenticator 300 select a specified authenticator according to the following rule:
selecting the authenticator with the greater source MAC address or the smaller one as a specified authenticator. When authenticators 200 and 300 select a specified authenticator, it is certain that the authenticator selected by the authenticator 200 is the same as the one selected by the authenticator 300 for the shared medium, because the source MAC addresses of authenticators 200 and 300 are fixed and the rule for selecting the authenticator with the greater source MAC address or the smaller one is fixed.

After the authenticators 200 and 300 select a specified authenticator, other authenticators monitor the authentication process between the specified authenticator and the requester 100. For example, if the specified authenticator is authenticator 200, the authenticator 300 monitors the authentication process between the specified authenticator 200 and the requester 100. Likewise, if the specified authenticator is authenticator 300, the authenticator 200 monitors the authentication process between the authenticator 300 and the requester 100.

After authenticating the requester 100 successfully, the specified authenticator sends an EAP-Success message to the requester 100. The destination MAC address of the message is multicast address "01-80-C2-00-00-03", and the message carries the information indicative of the requester. Other authenticators assign rights to the requester 100 according to the received message. If the requester 100 is authenticated unsuccessfully, the specified authenticator sends an EAP-Failure message to the requester 100.

Further, a requester disclosed in an embodiment of the present invention includes an authentication interaction unit and an authenticator selecting unit; wherein:
the authentication interaction unit is adapted to send an authentication request, receive a response message carrying a source MAC address and a destination MAC address from each authenticator, and perform authentication with the specified authenticator; and
the authenticator selecting unit is adapted to compare the source MAC address between the authenticators, where the destination MAC address is the requester address, and select an authenticator as a specified authenticator according to the set address selection rule.

The foregoing address selection rule is to select the authenticator with the greater source MAC address or the smaller one as a specified authenticator.

Further, an authenticator disclosed in an embodiment of the present invention includes an authentication interaction unit, an authenticator selecting unit, a monitoring unit, and an authorizing unit, wherein:
the authentication interaction unit is adapted to return a response message carrying a source MAC address and a destination MAC address to the requester after receiving an authentication request; the destination MAC address is a multicast address; the authentication interaction unit performs authentication interaction with the requester when the authenticator is a specified authenticator;
the authenticator selecting unit is adapted to compare the source MAC address between the authenticators, and select an authenticator as a specified authenticator according to the set address selection rule;
the monitoring unit is adapted to monitor the authentication process between the authenticator and the requester when the authenticator is a non-specified authenticator; and
the authorizing unit is adapted to receive an authentication success message carrying requester information from the specified authenticator, and assign rights to the requester.

The foregoing address selection rule is to select the authenticator with the greater source MAC address or the smaller one as a specified authenticator.

Detailed above are an authentication method and an authentication system under the present invention. Although the invention is described through some exemplary embodiments, the invention is not limited to such embodiments. It is apparent that those skilled in the art can make various modifications and variations to the invention without departing from the scope of the invention. The invention shall cover the modifications and variations provided that they fall in the scope of protection defined by the following claims or their equivalents.

## Claims

1. An authentication method, comprising:
sending, by a requester, an authentication request, wherein at least two authenticators receive the authentication request (A1);
returning, by each authenticator that receives the authentication request, a response message carrying a source Media Access Control , MAC, address and a destination MAC address;
and
comparing the source MAC address between the at least two authenticators (A2), selecting an authenticator as a specified authenticator among the at least two authenticators according to an address selection rule as set, and performing authentication between the requester (A3) and the specified authenticator.

2. The authentication method of claim 1, wherein:
the address selection rule is to select the authenticator with a greater source MAC address or a smaller one as a specified authenticator.

3. The authentication method of claim 1, wherein:
the destination MAC address carried in the response message returned by the authenticator is a requester address; and comparison is performed by the requester.

4. The authentication method of claim 1, wherein:
the destination MAC address carried in the response messages returned by the authenticators is a multicast address; and the comparison is performed by the authenticators.

5. The authentication method of claim 4, further comprising:
a non-specified authenticator that receives the authentication request monitors authentication between the specified authenticator and the requester.

6. The authentication method according to any of claim 1 to claim 5, wherein:
after the requester is authenticated successfully, the specified authenticator sends an authentication success message to the requester;
the destination MAC address of the authentication success message is a multicast address, and the message carries information indicative of the requester; and
the non-specified authenticator assigns rights to the requester according to the received authentication success message.

7. The authentication method of claim 1, wherein:
the authentication is 802.1x authentication.

8. An authentication system, comprising a requester and at least two authenticators;
the requester (100) is adapted to send an authentication request, receive a response message carrying a source Media Access Control, MAC, address and a destination MAC address from each authenticator, compare the source MAC address of the received responses, select an authenticator as a specified authenticator according to an address selection rule as set, and perform authentication with the specified authenticator; and
each authenticator (200, 300) is adapted to return the response message carrying a source MAC address and a destination MAC address to the requester after receiving the authentication request wherein the destination MAC address is a requester address, the specified authenticator is adapted to perform authentication interaction with the requester;
or,
the requester (100) is adapted to send an authentication request, receive a response message carrying a source MAC address and a destination MAC address from each authenticator, and perform authentication with the specified authenticator;
and
each authenticator (200, 300) is adapted to return the response message carrying a source MAC address and a destination MAC address to the requester after receiving the authentication request wherein the destination MAC address is a multicast address; compare the source MAC address between the authenticators, select an authenticator as the specified authenticator according to an address selection rule as set, and to perform authentication interaction between the specified authenticator and the requester;

9. The authentication system of claim 8, wherein:
the address selection rule is to select the authenticator with a greater source MAC address or a smaller one as the specified authenticator.

10. The authentication system of claim 8 or claim 9, wherein:
after the authenticator selects the specified authenticator, non-specified authenticators monitor the authentication between the specified authenticator and the requester.

11. The authentication system of claim 8 or claim 9, wherein:
the specified authenticator is further adapted to send an authentication success message to the requester after the requester is authenticated successfully;
the destination MAC address of the authentication sucess message is a multicast address, and the message carries information indicative of the requester; and
the non-specified authenticator is further adapted to assign rights to the requester according to the received authentication success message.

12. A requester, comprising:
an authentication interaction unit, adapted to send an authentication request, receive a response message carrying a source Media Access Control, MAC, address and a destination MAC address from at least two authenticators, and perform authentication with a specified authenticator; and
an authenticator selecting unit, adapted to compare the source MAC address of the response messages from the authenticators, wherein the destination MAC address is a requester
address; and select an authenticator as the specified authenticator according to an address selection rule as set.

13. The requester of claim 12, wherein:
the address selection rule is to select the authenticator with a greater source MAC address or a smaller one as a specified authenticator.

14. An authenticator, comprising:
an authentication interaction unit, adapted to return a response message carrying a source Media Access Control, MAC, address and a destination MAC address to a requester after receiving an authentication request; wherein the destination MAC address is a multicast address; and the authentication interaction unit is adapted to perform authentication interaction with the requester when the authenticator is the specified authenticator;
an authenticator selecting unit, adapted to receive response messages from at least one other authenticator and to compare the source MAC address of the received messages with the MAC address of the authenticator, and select an authenticator as the specified authenticator
according to an address selection rule as set;
a monitoring unit, adapted to monitor authentication between the specified authenticator and the requester when the authenticator is a non-specified authenticator; and
an authorizing unit, adapted to receive an authentication success message carrying requester information from the specified authenticator, and assign rights to the requester.

15. The authenticator of claim 14, wherein:
the address selection rule is to select the authenticator with a greater source MAC address or a smaller one as a specified authenticator.

## Patentansprüche

1. Authentifizierungsverfahren, das Folgendes umfasst:
durch einen Anforderer Senden einer Authentifizierungsanforderung, wobei mindestens zwei Authentifikatoren die Authentifizierungsanforderung empfangen (A1);
durch jeden Authentifikator, der die Authentifizierungsanforderung empfängt, Zurücksenden einer Antwortnachricht, die eine Medienzugriffssteuerungs-Quellenadresse, MAC-Quellenadresse, und eine MAC-Zieladresse führt; und Vergleichen der MAC-Quellenadresse zwischen den mindestens zwei Authentifikatoren (A2), Auswählen eines Authentifikators als festgelegten Authentifikator unter den mindestens zwei Authentifikatoren gemäß einer Adressenauswahlregel, wie festgelegt, und Durchführen der Authentifizierung zwischen dem Anforderer (A3) und dem festgelegten Authentifikator.

2. Authentifizierungsverfahren nach Anspruch 1, wobei:
die Adressenauswahlregel darin besteht, den Authentifikator mit einer größeren MAC-Quellenadresse oder einer kleineren als festgelegten Authentifikator auszuwählen.

3. Authentifizierungsverfahren nach Anspruch 1, wobei:
die MAC-Zieladresse, die in der Antwortnachricht geführt wird, die vom Authentifikator zurückgesendet wird, eine Adresse des Anforderers ist; und der Vergleich durch den Anforderer durchgeführt wird.

4. Authentifizierungsverfahren nach Anspruch 1, wobei:
die MAC-Ziel-Adresse, die in den Antwortnachrichten geführt wird, die von den Authentifikatoren zurückgesendet wird, eine Multicast-Adresse ist; und der Vergleich durch die Authentifikatoren durchgeführt wird.

5. Authentifizierungsverfahren nach Anspruch 4, das ferner Folgendes umfasst:
einen nicht festgelegten Authentifikator, der die Authentifizierungsanforderung empfängt und die Authentifizierung zwischen dem festgelegten Authentifikator und dem Anforderer überwacht.

6. Authentifizierungsverfahren nach einem von Anspruch 1 bis Anspruch 5, wobei:
nachdem der Anforderer erfolgreich authentifiziert ist, der festgelegte Authentifikator eine Authentifizierungserfolgsnachricht zum Anforderer sendet;
die MAC-Zieladresse der Authentifizierungserfolgsnachricht eine Multicast-Adresse ist und die Nachricht Informationen führt, die den Anforderer angeben; und
der nicht festgelegte Authentifikator dem Anforderer Rechte gemäß der empfangenen Authentifizierungserfolgsnachricht zuweist.

7. Authentifizierungsverfahren nach Anspruch 1, wobei:
die Authentifizierung eine 802.1x-Authentifizierung ist.

8. Authentifizierungssystem mit einem Anforderer und mindestens zwei Authentifikatoren;
wobei der Anforderer (100) dazu ausgelegt ist, eine Authentifizierungsanforderung zu senden, eine Antwortnachricht, die eine Medienzugriffssteuerungs-Quellenadresse, MAC-Quellenadresse, und eine MAC-Zieladresse führt, von jedem Authentifikator zu empfangen, die MAC-Quellenadresse der empfangenen Antworten zu vergleichen, einen Authentifikator als festgelegten Authentifikator gemäß einer Adressenauswahlregel, wie festgelegt, auszuwählen und eine Authentifizierung mit dem festgelegten Authentifikator durchzuführen; und
wobei jeder Authentifikator (200, 300) dazu ausgelegt ist, die Antwortnachricht, die eine MAC-Quellenadresse und eine MAC-Zieladresse führt, zum Anforderer nach dem Empfangen der Authentifizierungsanforderung zurückzusenden, wobei die MAC-Zieladresse eine Adresse des Anforderers ist, wobei der festgelegte Authentifikator dazu ausgelegt ist, eine Authentifizierungszusammenwirkung mit dem Anforderer durchzuführen,
oder
der Anforderer (100) dazu ausgelegt ist, eine Authentifizierungsanforderung zu senden, eine Antwortnachricht, die eine MAC-Quellenadresse und eine MAC-Zieladresse führt, von jedem Authentifikator zu empfangen und eine Authentifizierung mit dem festgelegten Authentifikator durchzuführen, und
jeder Authentifikator (200, 300) dazu ausgelegt ist, die Antwortnachricht, die eine MAC-Quellenadresse und eine MAC-Zieladresse führt, nach dem Empfangen der Authentifizierungsanforderung zum Anforderer zurückzusenden, wobei die MAC-Zieladresse eine Multicast-Adresse ist; die MAC-Quellenadresse zwischen den Authentifikatoren zu vergleichen, einen Authentifikator als festgelegten Authentifikator gemäß einer Adressenauswahlregel, wie festgelegt, auszuwählen und eine Authentifizierungszusammenwirkung zwischen dem festgelegten Authentifikator und dem Anforderer durchzuführen.

9. Authentifizierungssystem nach Anspruch 8, wobei:
die Adressenauswahlregel darin besteht, den Authentifikator mit einer größeren oder
einer kleineren MAC-Quellenadresse als festgelegten Authentifikator auszuwählen.

10. Authentifizierungssystem nach Anspruch 8 oder Anspruch 9, wobei:
nachdem der Authentifikator den festgelegten Authentifikator auswählt, nicht festgelegte Authentifikatoren die Authentifizierung zwischen dem festgelegten Authentifikator und dem Anforderer überwachen.

11. Authentifizierungssystem nach Anspruch 8 oder Anspruch 9, wobei:
der festgelegte Authentifikator ferner dazu ausgelegt ist, eine Authentifizierungserfolgsnachricht zum Anforderer zu senden, nachdem der Anforderer erfolgreich authentifiziert ist;
die MAC-Zieladresse der Authentifizierungserfolgsnachricht eine Multicast-Adresse ist und die Nachricht Informationen führt, die den Anforderer angeben; und
der nicht festgelegte Authentifikator ferner dazu ausgelegt ist, dem Anforderer gemäß der empfangenen Authentifizierungserfolgsnachricht Rechte zuzuweisen.

12. Anforderer, der Folgendes umfasst:
eine Authentifizierungszusammenwirkungseinheit, die dazu ausgelegt ist, eine Authentifizierungsanforderung zu senden, eine Antwortnachricht, die eine Medienzugriffssteuerungs-Quellenadresse, MAC-Quellenadresse, und eine MAC-Zieladresse führt, von mindestens zwei Authentifikatoren zu empfangen und eine Authentifizierung mit einem festgelegten Authentifikator durchzuführen; und
eine Authentifikatorauswahleinheit, die dazu ausgelegt ist, die MAC-Quellenadresse der Antwortnachrichten von den Authentifikatoren zu vergleichen, wobei die MAC-Zieladresse eine Adresse des Anforderers ist; und einen Authentifikator als festgelegten Authentifikator gemäß einer Adressenauswahlregel, wie festgelegt, auszuwählen.

13. Anforderer nach Anspruch 12, wobei:
die Adressenauswahlregel darin besteht, den Authentifikator mit einer größeren MAC-Quellenadresse oder einer kleineren als festgelegten Authentifikator auszuwählen.

14. Authentifikator, der Folgendes umfasst:
eine Authentifizierungszusammenwirkungseinheit, die dazu ausgelegt ist, eine Antwortnachricht, die eine Medienzugriffssteuerungs-Quellenadresse, MAC-Quellenadresse, und eine MAC-Zieladresse führt, zu einem Anforderer nach dem Empfangen einer Authentifizierungsanforderung zurückzusenden; wobei die MAC-Zieladresse eine Multicast-Adresse ist, und die Authentifizierungszusammenwirkungseinheit dazu ausgelegt ist, eine Authentifizierungszusammenwirkung mit dem Anforderer durchzuführen, wenn der Authentifikator der festgelegte Authentifikator ist;
eine Authentifikatorauswahleinheit, die dazu ausgelegt ist, Antwortnachrichten von mindestens einem anderen Authentifikator zu empfangen und die MAC-Quellenadresse der empfangenen Nachrichten mit der MAC-Adresse des Authentifikators zu vergleichen und einen Authentifikator gemäß einer Adressenauswahlregel, wie festgelegt, als festgelegten Authentifikator auszuwählen;
eine Überwachungseinheit, die dazu ausgelegt ist, eine Authentifizierung zwischen dem festgelegten Authentifikator und dem Anforderer zu überwachen, wenn der Authentifikator ein nicht festgelegter Authentifikator ist; und
eine Autorisierungseinheit, die dazu ausgelegt ist, eine Authentifizierungserfolgsnachricht, die Informationen des Anforderers führt, vom festgelegten Authentifikator zu empfangen, und dem Anforderer Rechte zuzuweisen.

15. Authentifikator nach Anspruch 14, wobei:
die Adressenauswahlregel darin besteht, den Authentifikator mit einer größeren MAC-Quellenadresse oder einer kleineren als festgelegten Authentifikator auszuwählen.

## Revendications

1. Procédé d'authentification comprenant les étapes suivantes :
envoyer, par l'intermédiaire d'un demandeur, une demande d'authentification, dans laquelle au moins deux authentificateurs reçoivent la demande d'authentification (A1) ;
retourner, par l'intermédiaire de chacun des authentificateurs qui reçoit la demande d'authentification, un message de réponse acheminant une adresse de Contrôle d'Accès de Support, MAC, source, et une adresse MAC de destination ; et
comparer l'adresse MAC source entre les au moins deux authentificateurs (A2), en sélectionnant un authentificateur en tant qu'authentificateur spécifié parmi les au moins deux authentificateurs selon une règle de sélection d'adresse telle qu'établie, et
en procédant à une authentification entre le demandeur (A3) et l'authentificateur spécifié.

2. Procédé d'authentification selon la revendication 1, dans lequel :
la règle de sélection d'adresse comprend de sélectionner l'authentificateur avec une adresse MAC source plus grande ou plus petite en tant qu'un authentificateur spécifié.

3. Procédé d'authentification selon la revendication 1, dans lequel :
l'adresse MAC de destination acheminée dans le message de réponse retourné par l'authentificateur est une adresse de demandeur ; et une comparaison est effectuée par le demandeur.

4. Procédé d'authentification selon la revendication 1, dans lequel :
l'adresse MAC de destination acheminée dans les messages de réponse retournés par les authentificateurs est une adresse de multidiffusion ; et la comparaison est effectuée par les authentificateurs.

5. Procédé d'authentification selon la revendication 4, comprenant en outre :
qu'un authentificateur non spécifié qui reçoit la demande d'authentification contrôle l'authentification entre l'authentificateur spécifié et le demandeur.

6. Procédé d'authentification selon l'une quelconque des revendications 1 à 5, dans lequel :
après que le demandeur a été authentifié avec succès, l'authentificateur spécifié envoie un message de succès d'authentification au demandeur ;
l'adresse MAC de destination du message de succès d'authentification est une adresse de multidiffusion, et le message achemine des informations indicatives du demandeur ; et
l'authentificateur non spécifié attribue des droits au demandeur selon le message de succès d'authentification reçu.

7. Procédé d'authentification selon la revendication 1, dans lequel :
l'authentification est une authentification 802.1x.

8. Système d'authentification, comprenant un demandeur et au moins deux authentificateurs ; dans lequel :
le demandeur (100) est conçu pour envoyer une demande d'authentification, pour recevoir un message de réponse acheminant une adresse de Contrôle d'Accès de Support, MAC, source et une adresse MAC de destination provenant de chaque authentificateur, pour comparer l'adresse MAC source des réponses reçues, pour sélectionner un authentificateur en tant qu'authentificateur spécifié selon une règle de sélection d'adresse telle qu'établie, et pour procéder à une authentification avec l'authentificateur spécifié ; et
chaque authentificateur (200, 300) est conçu pour retourner le message de réponse acheminant une adresse MAC source et une adresse MAC de destination au demandeur après réception de la demande d'authentification, l'adresse MAC de destination étant une adresse de demandeur, l'authentificateur spécifié étant conçu pour effectuer une interaction d'authentification avec le demandeur ;
ou,
le demandeur (100) est conçu pour envoyer une demande d'authentification, recevoir un message de réponse acheminant une adresse MAC source et une adresse MAC de destination provenant de chaque authentificateur, et procéder à une authentification avec l' authentificateur spécifié ;
et
chaque authentificateur (200, 300) est conçu pour retourner le message de réponse acheminant une adresse MAC source et une adresse MAC de destination au demandeur après réception de la demande d'authentification, l'adresse MAC de destination étant une adresse de multidiffusion ; pour comparer l'adresse MAC source entre les authentificateurs, pour sélectionner un authentificateur en tant qu'authentificateur spécifié selon une règle de sélection d'adresse telle qu'établie, et
pour effectuer une interaction d'authentification entre l'authentificateur spécifié et le demandeur.

9. Système d'authentification selon la revendication 8, dans lequel :
la règle de sélection d'adresse comprend de sélectionner l'authentificateur avec une adresse MAC source plus grande ou plus petite en tant qu'authentificateur spécifié.

10. Système d'authentification selon les revendications 8 ou 9, dans lequel :
après que l'authentificateur a sélectionné l'authentificateur spécifié, les authentificateurs non spécifiés contrôlent l'authentification entre l'authentificateur spécifié et le demandeur.

11. Système d'authentification selon les revendications 8 ou 9, dans lequel :
l'authentificateur spécifié est conçu en outre pour envoyer un message de succès d'authentification au demandeur après que le demandeur a été authentifié avec succès ;
l'adresse MAC de destination du message de succès d'authentification est une adresse de multidiffusion, et le message achemine des informations indicatives du demandeur ; et
l'authentificateur non spécifié est en outre conçu pour attribuer des droits au demandeur selon le message de succès d'authentification reçu.

12. Demandeur, comprenant :
une unité d'interaction d'authentification, conçue pour envoyer une demande d'authentification, recevoir un message de réponse acheminant une adresse de Contrôle d'Accès de Support, MAC, source et une adresse MAC de destination provenant d'au moins deux authentificateurs, et effectuer une authentification avec un authentificateur spécifié ; et
une unité de sélection d'authentificateur, conçue pour comparer l'adresse MAC source des messages de réponse provenant des authentificateurs, où l'adresse MAC de destination correspond à une adresse de demandeur ; et sélectionner un authentificateur en tant qu'authentificateur spécifié selon une règle de sélection d'adresse telle qu'établie.

13. Demandeur selon la revendication 12, dans lequel :
la règle de sélection d'adresse comprend de sélectionner l'authentificateur avec une adresse MAC source plus grande ou plus petite en tant qu'un authentificateur spécifié.

14. Authentificateur, comprenant :
une unité d'interaction d'authentification, conçue pour retourner un message de réponse acheminant une adresse de Contrôle d'Accès de Support, MAC, source et une adresse MAC de destination à un demandeur après réception d'une demande d'authentification ; où l'adresse MAC de destination est une adresse de multidiffusion ; et l'unité d'interaction d'authentification est conçue pour effectuer une interaction d'authentification avec le demandeur lorsque l'authentificateur est l'authentificateur spécifié ;
une unité de sélection d'authentificateur, conçue pour recevoir des messages de réponse provenant au moins d'un autre authentificateur et pour comparer l'adresse MAC source des messages reçus avec l'adresse MAC de l'authentificateur, et
sélectionner un authentificateur en tant qu'authentificateur spécifié selon une règle de sélection d'adresse telle qu'établie ;
une unité de contrôle, conçue pour contrôler une authentification entre l'authentificateur spécifié et le demandeur lorsque l'authentificateur est un authentificateur non spécifié ; et
une unité d'autorisation, conçue pour recevoir un message de succès d'authentification acheminant des informations concernant le demandeur provenant de l'authentificateur spécifié, et attribuer des droits au demandeur.

15. Authentificateur selon la revendication 14, dans lequel :
la règle de sélection d'adresse comprend de sélectionner l'authentificateur avec une adresse MAC source plus grande ou plus petite en tant qu'un authentificateur spécifié.
